# EUROPEAN PATENT SPECIFICATION

(11) **EP 0 975 199 B1**
(45) Date of publication and mention of the grant of the patent: **10.11.2010**
(21) Application number: 99305824.7
(22) Date of filing: 22.07.1999
(51) Int. Cl.: H04Q 11/04, H04L 12/56

(54) **UBR traffic class for ATM with and without weighted priorities**
UBR Verkehrsklasse für ATM mit und ohne gewichteten Prioritäten
Classe de trafic UBR pour ATM avec et sans priorités pondérées

(30) Priority: 24.07.1998 US 94055 P
(43) Date of publication of application: 26.01.2000
(73) Proprietor: Ericsson AB, 164 80 Stockholm (SE)
(72) Inventor: Kim, Hyong S., Pittsburgh, PA 15215 (US); Sansom, Robert D., Pittsburgh, PA 15238 (US); Cleeton, Lawrence R., Butler, PA 16002 (US)
(74) Representative: Litchfield, Laura Marie

(56) References cited:
- KAI-YEUNG SIU ET AL: "Virtual queueing techniques for UBR+ service in ATM with fair access and minimum bandwidth guarantee" GLOBAL TELECOMMUNICATIONS CONFERENCE, 1997. GLOBECOM '97., IEEE PHOENIX, AZ, USA 3-8 NOV. 1997, NEW YORK, NY, USA,IEEE, US, vol. 2, 3 November 1997 (1997-11-03), pages 1081-1085, XP010254767 ISBN: 0-7803-4198-8
- SHINOHARA M ET AL: "MULTICLASS LARGE SCALE ATM SWITCH WITH QOS GUARANTEE" 1997 IEEE INTERNATIONAL CONFERENCE ON COMMUNICATIONS. MONTREAL, JUNE 8, vol. VOL. 1, 8 June 1997 (1997-06-08), pages 453-461, XP000740279 ISBN: 0-7803-3926-6
- SUNG WON LEE ET AL: "Improved dynamic weighted cell scheduling algorithm based on earliest deadline first scheme for various traffics of ATM switch" GLOBAL TELECOMMUNICATIONS CONFERENCE, 1996. GLOBECOM '96. 'COMMUNICATIONS: THE KEY TO GLOBAL PROSPERITY LONDON, UK 18-22 NOV. 1996, NEW YORK, NY, USA,IEEE, US, vol. 3, 18 November 1996 (1996-11-18), pages 1959-1963, XP010220219 ISBN: 0-7803-3336-5

## Description

### FIELD OF THE INVENTION

The present invention is related to ATM traffic having unknown characteristics including traffic with weighted priorities and traffic without weighted priorities. More specifically, the present invention is related to UBR connection traffic with weighted priorities (UBRw VC) and the traffic having unknown characteristics without weighted priorities is UBR VC traffic.

### BACKGROUND OF THE INVENTION

Although CBR, VBR, ABR and UBR traffic classes are designed to support existing and forthcoming services, it is difficult to take full advantage of such flexibility since many data services have unknown traffic characteristics. There is much confusion among users when they are asked to provide UPC parameters for their network services.

The UBR traffic class is specifically designed to provide data services with unknown traffic characteristics. No parameters need to be specified for UBR and it provides the simplest user interface. In fact, UBR is the dominant traffic class in most enterprise networks and in many of the Internet backbone networks built on ATM.

However, new specifications such as IEEE 802.1p/Q specification and IETF Differentiated Services (incorporated by reference herein) are being developed and will likely see widespread deployment over the coming years. Both of these specifications do not assume any knowledge of the traffic characteristic, only that some traffic is "more important",in some sense, than others. These service specifications do not directly map into any existing ATM service classes. (Note that the IETF Integrated Services specification already maps directly into ATM service classes since it assumes that the traffic can be specified.)

In the current ATM specification, there is no way of distinguishing data traffic priority within the UBR traffic class. In order to provide this support, the present invention pertains to a UBRw traffic class within UBR. It enables both IEEE 802.1p/Q and IETF Differentiated Services to map directly into the ATM UBR service class. Without the UBRw traffic class, ATM's growth in the Internet and enterprise network will be limited.

Some examples of such distinguished data traffic include:
- A set of network end-points with better than UBR traffic QOS with unspecified UPC parameters.
- A set of applications with better than UBR traffic QOS with unspecified UPC parameters.
- An ISP could offer different grades of services to customers who require UBR traffic class.
- Corporate VPNs can have different grades of services.

Together with ATM's scalability and manageability, UBRw service would be very attractive to many ISPs. It would also be equally beneficial in enterprise ATM networks.

The present invention describes UBRw, a weighted traffic service within the UBR traffic class. UBRw allows for support of both IEEE 802.1p/Q and IETF Differentiated Services traffic classes. In addition, it eases the problem of specifying UPC for services without well-known traffic characteristics but with relative priority requirements.

A paper by Kai-Yeung Siu et al ("Virtual Queueing Techniques for UBR+ Service in ATM with Fair Access and Minimum Bandwidth Guarantee", Global Telecommunications Conference 1997, IEEE, vol.2, pp 1081-1085) discloses a scheme for supporting the UBR+ service. This scheme involve virtual queuing techniques for the UBR+ service in ATM, with fair access and minimum bandwidth guarantees.

A paper by Shinohara M et al ("Multiclass Large Scale ATM Switch with QoS Guarantee", 1997 IEEE International Conference on Communications, vol. 1, pp 453-461) discloses a growable switch architecture with multiple modules comprising a CORE module to support high-speed switching and EDGE modules with large buffers, providing a large number of traffic classes. For best effort class services such as UBR, closed-loop control using adaptive rate control at the actual source and at the virtual source queue of the input EDGE module is proposed to avoid internal congestion and to achieve fair throughput performance among the flows competing on the same link.

### SUMMARY OF THE INVENTION

The present invention pertains to an ATM communication system. The system comprises a source which produces traffic for connections having known traffic characteristics and traffic for connections having unknown traffic characteristics. The traffic for connections having unknown characteristics includes traffic for connections with weighted priorities and traffic for connections without weighted priorities. The system comprises a network on which traffic travels. The source is connected to the network. The source sends the traffic for connections having known traffic characteristics and the traffic for connections having unknown traffic characteristics onto the network. The system comprises a destination which is connected to the network and receives the traffic for connections having known traffic characteristics and the traffic for connections having unknown traffic characteristics.

The present invention pertains to a source for producing ATM traffic for a network with switches. The source comprises a mechanism which produces traffic for connections having unknown traffic characteristics. The traffic includes traffic for connections with weighted priorities and traffic for connections without weighted priorities. The source comprises a mechanism for transmitting the traffic to the network.

The present invention pertains to a switch for switching traffic on an ATM network from a source to a destination. The switch comprises a mechanism for receiving traffic for connections having unknown traffic characteristics. The traffic includes traffic for connections with weighted priorities and traffic for connections without weighted priorities. The switch comprises a mechanism for transmitting the traffic for connections to the network. The transmitting mechanism is connected to the receiving mechanism. The switch comprises a scheduler for scheduling when the connections having traffic with unknown characteristics having weighted priorities are to be transmitted to the network. The scheduler is connected to the transmitting mechanism and the receiving mechanism.

The present invention pertains to a method for transferring traffic in an ATM communication system. The method comprises the steps of transmitting from a source traffic of a connection having unknown traffic characteristics wich a weighted priority onto an ATM network. Then there is the step of transmitting from the source traffic of another connection having unknown traffic characteristics without a weighted priority onto the ATM network.

### BRIEF DESCRIPTION OF THE DRAWINGS

In the accompanying drawings, the preferred embodiment of the invention and preferred methods of practicing the invention are illustrated in which:
Figure 1 is a schematic representation of a system of the present invention.
Figure 2 is a schematic representation of a source of the present invention.
Figure 3 is a schematic representation of a switch of the present invention.
Figure 4 is a flow chart of a method of the present invention.
Figure 5 is a schematic representation of scheduling of UBRw VCs in a switch.

### DETAILED DESCRIPTION

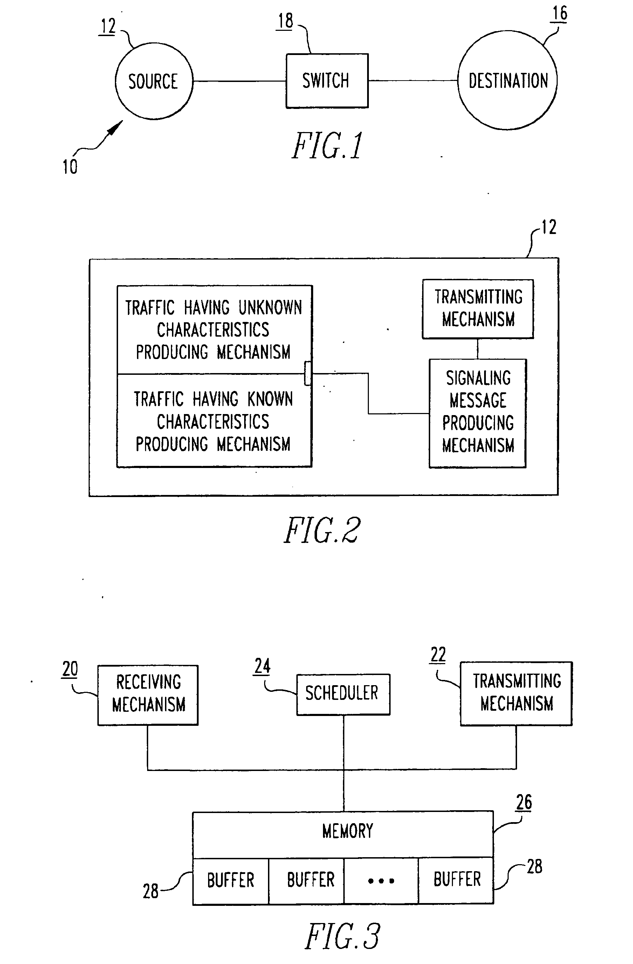

Referring now to the drawings wherein like reference numerals refer to similar or identical parts throughout the several views, and more specifically to figure 1 thereof, there is shown an ATM communication system 10. The system 10 comprises a source 12 which produces traffic for connections having known traffic characteristics and unknown traffic characteristics. The traffic has unknown characteristics including traffic with weighted priorities and traffic without weighted priorities. The system 10 comprises a network 14 on which traffic travels. The source 12 is connected to the network 14. The source 12 sends the traffic having known traffic characteristics and unknown traffic characteristics onto the network 14. The system 10 comprises a destination 16 which is connected to the network 14 and receives the traffic having known traffic characteristics and unknown traffic characteristics. Preferably, the system 10 includes a switch 18 connected to the network 14 which switches the traffic from the source 12 to the destination 16.

The present invention pertains to a source 12, as shown in figure 2, for producing ATM traffic for a network 14 with switches 18. The source 12 comprises a mechanism which produces traffic for connections having unknown traffic characteristics. The traffic includes traffic with weighted priorities and traffic without weighted priorities. The source 12 comprises a mechanism for transmitting the traffic to the network 14.

Preferably, the connections with traffic having unknown characteristics with weighted priorities are UBR connection traffic with weighted priorities (UBRw VC) and the traffic having unknown characteristics without weighted priorities is UBR VC traffic. The UBRw VC traffic preferably has multiple weighted priorities.

Preferably, the source 12 includes a mechanism for providing traffic having known traffic characteristics to the network 14. The traffic having known traffic characteristics is preferably either ABR, CBR, VBR or a combination of the same. Preferably, the source 12 includes a mechanism which produces a signaling message that identifies to switches 18 of the network 14 the weight of each UBRw VC.

The weight of the UBRw VC preferably specifies a relative priority among UBR VC and UBRw VC traffic. Preferably, the UBRw VCs having a higher weight receive a larger share of available bandwidth of the network 14. Each UBRw VC has preferably N bits associated with it which corresponds to the weight of its priority.

The present invention pertains to a switch 18, as shown in figure 3,for switching traffic on an ATM network 14 from a source 12 to a destination 16. The switch 18 comprises a mechanism for receiving traffic for connections having unknown traffic characteristics. The traffic includes traffic with weighted priorities and traffic without weighted priorities. The switch 18 comprises a mechanism for transmitting the traffic for connections to the network 14. The transmitting mechanism 22 is connected to the receiving mechanism 20. The switch 18 comprises a scheduler 24 for scheduling when the connections having traffic with unknown characteristics having weighted priorities are to be transmitted to the network 14. The scheduler 24 is connected to the transmitting mechanism 22 and the receiving mechanism 20.

Preferably, the connections with traffic having unknown characteristics with weighted priorities are UBR connection traffic with weighted priorities (UBRw VC) and the traffic having unknown characteristics without weighted priorities is UBR VC traffic.

The switch 18 preferably includes a memory 26 for storing the connections. The memory 26 is connected to the receiving mechanism 20, the scheduler 24 mechanism and the transmitting mechanism 22. Preferably, the memory 26 includes buffers 28 which are allocated according to the VC weight to give higher priority to the VCS with higher weight. The receiving mechanism 20 preferably also receives traffic having known characteristics of either ABR, CBR, VBR or a combination of the same. Preferably, the scheduler 24 utilizes weighted round robin scheduling to schedule when the UBRw VCs are to be transmitted by the transmitting mechanism 22.

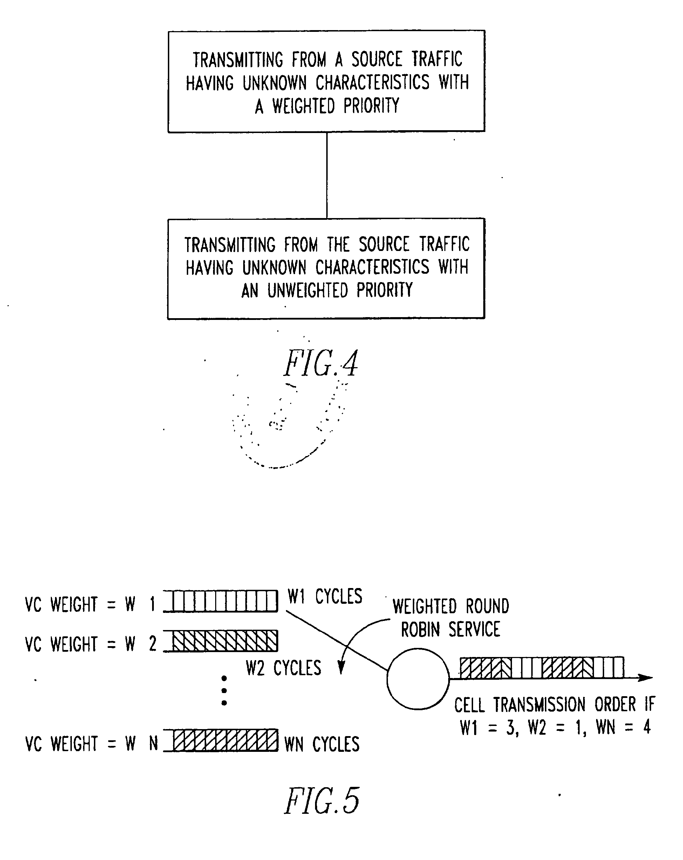

The present invention pertains to a method, as shown in figure 4, for transferring traffic in an ATM communication system 10. The method comprises the steps of transmitting from a source 12 traffic of a connection having unknown traffic characteristics with a weighted priority onto an ATM network 14. Then chere is the step of transmitting from the source 12 traffic of another connection having unknown traffic characteristics without a weighted priority onto the ATM network 14.

Before the step of transmitting the traffic of the connection having unknown traffic characteristics with a weighted priority, there is preferably the step of assigning a priority to the connection having unknown traffic characteristics with a weighted priority. Preferably, after the assigning step, there is the step of sending a signaling message from the source 12 to a switch 18 on the network 14 which is to receive the traffic of the connection having unknown traffic characteristics with a weighted priority so the switch 18 sets up a scheduling process corresponding with the weight of the priority of the connection having unknown traffic characteristics with a weighted priority.

The transmitting the traffic of the connection having unknown traffic characteristics with a weighted priority preferably includes the step of transmitting traffic of a UBR connection with a weighted priority (UBRw VC) and the step of transmitting traffic of another connection having unknown traffic characteristics without a weighted priority includes the step of transmitting traffic of a UBR connection without a weighted priority (UBR VC).

Preferably, after the assigning step, there is the step of transmitting from the source 12 traffic having known traffic characteristics of either ABR, CBR, VBR or a combination of the same. After the transmitting the UBRw VC step, there is preferably the step of receiving the UBRw VC at the switch 18. Preferably, after the receiving step, there is the step of scheduling the UBRw VC for transmission by the switch 18 onto the network 14 toward a destination 16 based on weighted round robin.

In the operation of the preferred embodiment, the distinction between UBRw and UBR is that UBRw has multiple weighted priorities (N bits, where, for example, N=8) in terms of cell delivery. The given priority is only meaningful relative to other connections with lower or higher priority. It is not intended to provide loss nor delay guarantees. UBRw VC would be identical to UBR VC except that UBRw VC has a weight associated with it. These weights specify relative "importance" of the VC within UBR VCS. The weight of a priority class may be assigned so that the higher weighted UBRw VC gets bigger share of the available bandwidth than lower weighted VCS.

The weight of a UBRw VC is communicated to the switches 18. This can be done along the path during call set-up time. The weight information is to be included in the signaling message.

As an example, a call set-up and data transfer processes is described as follows.
- A host requests a UBRw VC "A" with a weight of 8.
- Another host requests a UBRw VC "B" with a weight of 4.
- When each switch 18 in the path receives call set-up requests for VC "A" and VC "B", each switch 18 sets up a scheduling process with weight of 8 and 4 for VC "A" and VC "B" respectively.
- Although other scheduling algorithm could be used, let's assume a weighted round robin scheduling for simplicity in this example.
- The switch 18 with a weighted round robin scheduling will allocated weight of 8 and weight of 4 to VC "A" and "A" and "B". If we assume that the switch 18 has only two VCS ("A" and "B"), the scheduler 24 serves cells from VC "A" and "B" for 8 cycles and 4 cycles respectively (if cells are available).
- Thus, the cells from VC "A" are served twice as much as the cells from VC "B". Therefore, VC "A" gets more bandwidth than VC "B" proportional to their respective weights.
- Furthermore, buffers 28 in the switch 18 could be allocated according to VC weight to give higher priority to the VCS with higher weight as well.

Figure 5 shows the scheduling of UBRw VCS in the switch 18. The right side of figure 5 shows the transmission order of cells from VCS if W₁=3, W₂=1, and Wₙ=4. The scheduler 24 may also serve cells in different order as long as the proportion of served cells matches the proportion of W₁, W₂, and Wₙ.

Once UBRw service is allowed in switches 18, IETF Differentiated Service and IEEE 802.1p/Q traffic can be easily mapped into ATM transport. UBRw would also help ISPs to offer different grade of services to their customers and make specification of UPC easy.

Although the invention has been described in detail in the foregoing embodiments for the purpose of illustration, it is to be understood that such detail is solely for that purpose and that variations can be made therein by those skilled in the art without departing from the scope of the invention as defined by the following claims.

## Claims

1. An ATM communication system comprising:
a source which produces traffic for connections having known traffic characteristics and for connections having unknown traffic characteristics, said traffic for connections having unknown characteristics including traffic for connections with weighted priorities and traffic for connections without weighted priorities;
a network on which traffic travels, said source being connected to said network, said source sending said traffic for connections having known traffic characteristics and said traffic for connections having unknown traffic characteristics onto the network; and
a destination which is connected to the network and receives the traffic for connections having known traffic characteristics and the traffic for connections having unknown traffic characteristics.

2. A system as described in Claim 1 including a switch connected to the network which switches the traffic from the source to the destination.

3. A source for producing ATM traffic for a network with switches comprising:
a mechanism which produces traffic for connections having unknown traffic characteristics, said traffic including traffic for connections with weighted priorities and traffic for connections without weighted priorities; and
a mechanism for transmitting the traffic to the network.

4. A source as described in Claim 3 wherein the connections with traffic having unknown characteristics with weighted priorities are UBR connection traffic with weighted priorities (UBRw VC) and the traffic having unknown characteristics without weighted priorities is UBR VC traffic.

5. A source as described in Claim 4 wherein the UBRw VC traffic has multiple weighted priorities.

6. A source as described in Claim 5 including a mechanism for providing traffic having known traffic characteristics to the network.

7. A source as described in Claim 6 wherein the traffic having known traffic characteristics is either ABR, CBR, VBR or a combination of the same.

8. A source as described in Claim 7 including a mechanism which produces a signaling message that identifies to switches of the network the weight of each UBRw VC.

9. A source as described in Claim 8 wherein the weight of the UBRw VC specifies a relative priority among UBR VC and UBRw VC traffic.

10. A source as described in Claim 9 wherein the UBRw VCS having a higher weight receive a larger share of available bandwidth of the network.

11. A source as described in Claim 10 wherein each UBRw VC has N bits associated with it which corresponds to the weight of its priority.

12. A switch for switching traffic on an ATM network from a source to a destination comprising:
a mechanism for receiving traffic for connections having unknown traffic characteristics, said traffic including traffic for connections with weighted priorities and traffic for connections without weighted priorities;
a mechanism for transmitting the traffic for connections to the network, said transmitting mechanism connected to the receiving mechanism; and
a scheduler for scheduling when the connections having traffic with unknown characteristics having weighted priorities are to be transmitted to the network, said scheduler connected to the transmitting mechanism and the receiving mechanism.

13. A switch as described in Claim 12 wherein the traffic having unknown characteristics with weighted priorities is UBR connection traffic with weighted priorities (UBRw VC) and the traffic having unknown characteristics without weighted priorities is UBR VC traffic.

14. A switch as described in Claim 13 including a memory for storing the connections, said memory connected to the receiving mechanism, the scheduler and the transmitting mechanism.

15. A switch as described in Claim 14 wherein the memory includes buffers which are allocated according to the VC weight to give higher priority to the VCS with higher weight.

16. A switch as described in Claim 15 wherein the receiving mechanism also receives traffic having known characteristics of either ABR, CBR, VBR or a combination of the same.

17. A switch has described in Claim 16 wherein the scheduler utilizes weighted round robin scheduling to schedule when the UBRw VCS are to be transmitted by the transmitting mechanism.

18. A method for transferring traffic in an ATM communication system comprising the steps of:
transmitting from a source traffic of a connection having unknown traffic characteristics with a weighted priority onto an ATM network; and
transmitting from the source traffic of another connection having unknown traffic characteristics without a weighted priority onto the ATM network.

19. A method as described in Claim 18 including before the step of transmitting the traffic of the connection having unknown traffic characteristics with a weighted priority, there is the step of assigning a priority to the connection having unknown traffic characteristics with a weighted priority.

20. A method has described in Claim 19 including after the assigning step, there is the step of sending a signaling message from the source to a switch on the network which is to receive the traffic of the connection having unknown traffic characteristics with a weighted priority so the switch sets up a scheduling process corresponding with the weight of the priority of the connection having unknown traffic characteristics with a weighted priority.

21. A method as described in Claim 20 wherein the transmitting the traffic of the connection having unknown traffic characteristics with a weighted priority includes the step of transmitting traffic of a UBR connection with a weighted priority (UBRw VC) and the step of transmitting traffic of another connection having unknown traffic characteristics without a weighted priority includes the step of transmitting traffic of a UBR connection without a weighted priority (UBR VC).

22. A method as described in Claim 21 including after the assigning step, there is the step of transmitting from the source traffic having known traffic characteristics of either ABR, CBR, VBR or a combination of the same.

23. A method as described in Claim 22 including after the transmitting the UBRw VC step, there is the step of receiving the UBRw VC at the switch.

24. A method as described in Claim 22 including after the receiving step, there is the step of scheduling the UBRw VC for transmission by the switch onto the network toward a destination based on weighted round robin.

## Patentansprüche

1. ATM-Kommunikationssystem, mit:
einer Quelle, die einen Datenfluss erzeugt für Verbindungen mit bekannten Datenflusseigenschaften und für Verbindungen mit unbekannten Datenflusseigenschaften, wobei der Datenfluss für Verbindungen mit unbekannten Eigenschaften einen Datenfluss umfasst für Verbindungen mit gewichteten Prioritäten und einen Datenfluss für Verbindungen ohne gewichtete Prioritäten;
einem Netzwerk, auf dem der Datenfluss verkehrt, wobei die Quelle mit dem Netzwerk verbunden ist, die Quelle den Datenfluss für Verbindungen mit bekannten Datenflusseigenschaften und den Datenfluss für Verbindungen mit unbekannten Datenflusseigenschaften in das Netzwerk sendet; und
einem Ziel, das mit dem Netzwerk verbunden ist und den Datenfluss für Verbindungen mit bekannten Datenflusseigenschaften und den Datenfluss für Verbindungen mit unbekannten Datenflusseigenschaften empfängt.

2. System nach Anspruch 1, mit einem Schalter, der mit dem Netzwerk verbunden ist, der den Datenfluss von der Quelle zu dem Ziel schaltet.

3. Quelle zur Erzeugung eines ATM-Datenflusses für ein Netzwerk mit Schaltern, mit:
einer Einrichtung, die einen Datenfluss für Verbindungen mit unbekannten Datenflusseigenschaften erzeugt, wobei der Datenfluss einen Datenfluss für Verbindungen mit gewichteten Prioritäten und einen Datenfluss für Verbindungen ohne gewichtete Prioritäten umfasst; und
einer Einrichtung zum Übertragen des Datenflusses zu dem Netzwerk.

4. Quelle nach Anspruch 3, wobei die Verbindungen mit einem Datenfluss, der unbekannte Eigenschaften mit gewichteten Prioritäten aufweist, ein UBR-Verbindungsdatenfluss mit gewichteten Prioritäten (UBRw VC) ist und der Datenfluss mit unbekannten Eigenschaften ohne gewichtete Prioritäten ein UBR VC Datenfluss ist.

5. Quelle nach Anspruch 4, wobei der UBRw VC Datenfluss vielfach gewichtete Prioritäten aufweist.

6. Quelle nach Anspruch 5, mit einer Einrichtung zur Bereitstellung eines Datenflusses mit bekannten Datenflusseigenschaften für das Netzwerk.

7. Quelle nach Anspruch 6, wobei der Datenfluss mit bekannten Eigenschaften entweder ABR, CBR, VBR oder eine Kombination davon ist.

8. Quelle nach Anspruch 7, mit einer Einrichtung zur Erzeugung einer Signalnachricht, die Schaltern des Netzwerks das Gewicht von jedem UBRw VC anzeigt.

9. Quelle nach Anspruch 8, wobei das Gewicht des UBRw VC eine relative Priorität unter einem UBR VC und einem UBRw VC Datenfluss anzeigt.

10. Quelle nach Anspruch 9, wobei die UBRw VCS mit einem höheren Gewicht einen größeren Anteil verfügbarer Bandbreite des Netzwerks empfangen.

11. Quelle nach Anspruch 10, wobei jeder UBRw VC N damit verbundener Bits aufweist, die mit dem Gewicht dessen Priorität zusammenhängt.

12. Schalter zum Schalten eines Datenflusses in einem ATM-Netzwerk von einer Quelle zu einem Ziel, mit:
einer Einrichtung zum Empfangen des Datenflusses für Verbindungen mit unbekannten Datenflusseigenschaften, wobei der Datenfluss einen Datenfluss für Verbindungen mit gewichteten Prioritäten und einen Datenfluss für Verbindungen ohne gewichtete Prioritäten umfasst;
einer Einrichtung zum Übertragen des Datenflusses für Verbindungen an das Netzwerk, wobei die Übertragungseinrichtung mit der Empfangseinrichtung verbunden ist; und
einer Festlegungseinrichtung zum Festlegen, wann die Verbindungen, die einen Datenfluss mit unbekannten Eigenschaften mit gewichteten Prioritäten aufweisen, an das Netzwerk zu übertragen sind, wobei die Festlegungseinrichtung mit der Übertragungseinrichtung und der Empfangseinrichtung verbunden sind.

13. Schalter nach Anspruch 12, wobei der Datenfluss mit unbekannten Eigenschaften mit gewichteten Prioritäten ein UBR-Verbinungsdatenfluss mit gewichteten Prioritäten ist (UBRw VC) und der Datenfluss mit unbekannten Eigenschaften ohne gewichtete Prioritäten ein UBR VC Datenfluss ist.

14. Schalter nach Anspruch 13, mit einer Speichereinheit zum Speichern der Verbindungen, wobei die Speichereinheit mit der Empfangseinrichtung, der Festlegungseinrichtung und der Übertragungseinrichtung verbunden ist.

15. Schalter nach Anspruch 14, wobei die Speichereinheit Buffer umfasst, die entsprechend dem VC Gewicht verteilt werden, um den VCS mit höherem Gewicht eine höhere Priorität zu geben.

16. Schalter nach Anspruch 15, wobei die Empfangseinrichtung auch einen Datenfluss mit bekannten Eigenschaften von entweder ABR, CBR, VBR oder eine Kombination derselben empfängt.

17. Schalter nach Anspruch 16, wobei die Festlegungseinrichtung eine gewichtete Round-Robin-Ablaufsteuerung verwendet, um festzulegen, wann die UBRw VCS durch die Übertragungseinrichtung zu übertragen sind.

18. Verfahren zum Übertragen eines Datenflusses in einem ATM-Kommunikationssystem, mit den Schritten:
Übertragen, von einer Quelle, eines Datenflusses von einer Verbindung mit unbekannten Datenflusseigenschaften mit einer gewichteten Priorität zu einem ATM-Netzwerk; und
Übertragen, von der Quelle, eines Datenflusses einer anderen Verbindung mit unbekannten Datenflusseigenschaften ohne eine gewichtete Priorität zu einem ATM-Netzwerk.

19. Verfahren nach Anspruch 18, einschließlich, vor dem Schritt zum Übertragen des Datenflusses mit unbekannten Datenflusseigenschaften mit einer gewichteten Priorität, einem Schritt zum Zuweisen einer Priorität zu der Verbindung mit unbekannter Datenflusseigenschaft mit einer gewichteten Priorität.

20. Verfahren nach Anspruch 19, einschließlich, nach dem Zuweisungsschritt, einem Schritt zum Senden einer Signalnachricht von der Quelle zu einem Schalter in dem Netzwerk, der den Datenfluss der Verbindung mit unbekannten Eigenschaften mit einer gewichteten Priorität empfangen wird, sodass der Schalter einen Festlegungsprozess einstellt, der mit dem Gewicht der Priorität der Verbindung mit unbekannten Datenflusseigenschaften mit einer gewichteten Priorität zusammenhängt.

21. Verfahren nach Anspruch 20, wobei die Übertragung des Datenflusses der Verbindung mit unbekannten Datenflusseigenschaften mit einer gewichteten Priorität den Schritt umfasst zum Übertragen eines Datenflusses einer UBR Verbindung mit einer gewichteten Priorität (UBRw VC) und der Schritt zum Übertragen eines Datenflusses einer anderen Verbindung mit unbekannten Datenflusseigenschaften ohne eine gewichtete Priorität den Schritt umfasst zum Übertragen eines Datenflusses einer UBR Verbindung ohne eine gewichtete Priorität (UBR VC).

22. Verfahren nach Anspruch 21, einschließlich, nach dem Zuweisungsschritt, einem Schritt zum Übertragen von der Quelle eines Datenflusses mit bekannten Datenflusseigenschaften von entweder ABR, CBR, VBR oder einer Kombination derselben.

23. Verfahren nach Anspruch 22, einschließlich, nach dem Empfangsschritt, einem Schritt zum Empfangen der UBRw VC an dem Schalter.

24. Verfahren nach Anspruch 22, einschließlich, nach dem Empfangsschritt, einem Schritt zum Festlegen des UBRw VC für die Übertragung durch den Schalter in das Netzwerk zu dem Ziel, auf Grundlage eines gewichteten Round-Robin-Verfahrens.

## Revendications

1. Système de communication basé sur ATM comprenant :
une source qui produit du trafic pour des connexions ayant des caractéristiques de trafic connues et pour des connexions ayant des caractéristiques de trafic inconnues, ledit trafic pour des connexions ayant des caractéristiques inconnues comportant du trafic pour des connexions à priorités pondérées et du trafic pour des connexions sans priorités pondérées ;
un réseau sur lequel se propage le trafic, ladite source étant connectée audit réseau, ladite source envoyant ledit trafic pour des connexions ayant des caractéristiques de trafic connues et ledit trafic pour des connexions ayant des caractéristiques de trafic inconnues sur le réseau ; et
une destination qui est connectée au réseau et reçoit le trafic pour des connexions ayant des caractéristiques de trafic connues et le trafic pour des connexions ayant des caractéristiques de trafic inconnues.

2. Système tel que décrit dans la revendication 1 comportant un commutateur connecté au réseau qui commute le trafic de la source jusqu'à la destination.

3. Source destinée à produire un trafic ATM pour un réseau muni de commutateurs comprenant :
un mécanisme qui produit du trafic pour des connexions ayant des caractéristiques de trafic inconnues, ledit trafic comportant du trafic pour des connexions à priorités pondérées et du trafic pour des connexions sans priorités pondérées ; et
un mécanisme destiné à transmettre le trafic au réseau.

4. Source telle que décrite dans la revendication 3, dans laquelle les connexions avec du trafic ayant des caractéristiques inconnues à priorités pondérées sont du trafic à connexions UBR à priorités pondérées (UBRw VC) et le trafic ayant des caractéristiques inconnues sans priorités pondérées est un trafic UBR VC.

5. Source telle que décrite dans la revendication 4, dans laquelle le trafic UBRw VC possède des priorités pondérées multiples.

6. Source telle que décrite dans la revendication 5, comportant un mécanisme pour fournir au réseau du trafic ayant des caractéristiques de trafic connues.

7. Source telle que décrite dans la revendication 6, dans laquelle le trafic ayant des caractéristiques de trafic connues est soit ABR, CBR, VBR ou leur combinaison.

8. Source telle que décrite dans la revendication 7, comportant un mécanisme qui produit un message de signalisation qui identifie à des commutateurs du réseau le poids de chaque UBRw VC.

9. Source telle que décrite dans la revendication 8, dans laquelle le poids du UBRw VC spécifie une priorité relative parmi le trafic UBR VC et UBRw VC.

10. Source telle que décrite dans la revendication 9, dans laquelle les UBRw VC ayant un poids plus élevé reçoivent une part plus importante de la bande passante disponible du réseau.

11. Source telle que décrite dans la revendication 10, dans laquelle chaque UBRw VC a N bits qui lui sont associés qui correspond au poids de sa priorité.

12. Commutateur destiné à la commutation de trafic sur un réseau ATM depuis une source jusqu'à une destination comprenant :
un mécanisme destiné à recevoir du trafic pour des connexions ayant des caractéristiques de trafic inconnues, ledit trafic comportant du trafic pour des connexions à priorités pondérées et du trafic pour des connexions sans priorités pondérées ;
un mécanisme destiné à transmettre le trafic pour des connexions au réseau, ledit mécanisme de transmission connecté au mécanisme de réception ; et
un planificateur destiné à planifier le moment auquel les connexions ayant du trafic avec des caractéristiques inconnues à priorités pondérées doivent être transmises au réseau, ledit planificateur connecté au mécanisme de transmission et au mécanisme de réception.

13. Commutateur tel que décrit dans la revendication 12, dans lequel le trafic ayant des caractéristiques inconnues à priorités pondérées est un trafic de connexions UBR à priorités pondérées (UBRw VC) et le trafic ayant des caractéristiques inconnues sans priorités pondérées est un trafic UBR VC.

14. Commutateur tel que décrit dans la revendication 13, comportant une mémoire destinée à mémoriser les connexions, ladite mémoire étant connectée au mécanisme de réception, au planificateur ainsi qu'au mécanisme de transmission.

15. Commutateur tel que décrit dans la revendication 14, dans lequel la mémoire comporte des tampons qui sont alloués selon le poids VC pour donner une priorité plus élevée aux VC à poids plus élevé.

16. Commutateur tel que décrit dans la revendication 15, dans lequel le mécanisme de réception reçoit également du trafic ayant des caractéristiques connues basé soit sur ABR, CBR, VBR ou sur leur combinaison.

17. Commutateur tel que décrit dans la revendication 16, dans lequel le planificateur utilise une planification par permutation circulaire pondérée pour planifier le moment auquel les UBRw VC doivent être transmis par le mécanisme de transmission.

18. Procédé de transfert de trafic dans un système de communication basé sur ATM comprenant les étapes qui consistent à :
transmettre d'une source, un trafic d'une connexion ayant des caractéristiques de trafic inconnues à priorité pondérée sur un réseau ATM ; et
transmettre de la source, un trafic d'une autre connexion ayant des caractéristiques de trafic inconnues sans priorité pondérée sur le réseau ATM.

19. Procédé tel que décrit dans la revendication 18, comportant, avant l'étape de transmission du trafic de la connexion ayant des caractéristiques de trafic inconnues à priorité pondérée, l'étape qui consiste à allouer une priorité à la connexion ayant des caractéristiques de trafic inconnues avec une priorité pondérée.

20. Procédé tel que décrit dans la revendication 19, comportant, après l'étape d'allocation, une étape qui consiste à envoyer un message de signalisation de la source à un commutateur sur le réseau qui va recevoir le trafic de la connexion ayant des caractéristiques de trafic inconnues avec une priorité pondérée de sorte que le commutateur met en place un processus de planification correspondant au poids de la priorité de la connexion ayant des caractéristiques de trafic inconnues avec une priorité pondérée.

21. Procédé tel que décrit dans la revendication 20, dans lequel la transmission du trafic de la connexion ayant des caractéristiques de trafic inconnues avec une priorité pondérée comporte l'étape qui consiste à transmettre du trafic d'une connexion UBR avec une priorité pondérée (UBRw VC) et l'étape qui consiste à transmettre du trafic d'une autre connexion ayant des caractéristiques de trafic inconnues sans priorité pondérée comporte l'étape qui consiste à transmettre du trafic d'une connexion UBR sans priorité pondérée (UBR VC).

22. Procédé tel que décrit dans la revendication 21 comportant, après l'étape d'allocation, l'étape qui consiste à transmettre de la source du trafic ayant des caractéristiques de trafic connues, basé soit sur ABR, CBR, VBR ou sur leur combinaison.

23. Procédé tel que décrit dans la revendication 22 comportant, après l'étape de transmission de UBR VC, l'étape qui consiste à recevoir le UBRw VC au niveau du commutateur.

24. Procédé tel que décrit dans la revendication 22 comportant, après l'étape de réception, l'étape qui consiste à planifier le UBRw VC pour transmission par le commutateur sur le réseau vers une destination sur la base d'une répartition par permutation circulaire pondérée.
